Europäisches Patentamt

European Patent Office

Office européen des brevets

(19)

(11) EP 0 390 534 B1

(12) EUROPEAN PATENT SPECIFICATION

(45) Date of publication and mention
of the grant of the patent:
**10.01.1996 Bulletin 1996/02**

(51) Int Cl.6: **H04N 3/08**

(21) Application number: **90303311.6**

(22) Date of filing: **28.03.1990**

(54) **Laser beam deflection apparatus**

Laserstrahlenablenkungsgerät

Appareil de déflexion d'un rayon laser

(84) Designated Contracting States:
**DE FR GB**

(30) Priority: **30.03.1989 JP 79944/89**

(43) Date of publication of application:
**03.10.1990 Bulletin 1990/40**

(73) Proprietor: **SONY CORPORATION
Tokyo 141 (JP)**

(72) Inventors:
- **Iwai, Junichi, c/o Patents Division, Sony Corp.
Tokyo 141 (JP)**

- **Nakane, Yasuaki,
c/o Sony Magnetic Products Inc.
Tokyo 141 (JP)**
- **Nakayama, Hiroshi,
c/o Sony Magnetic Products Inc.
Tokyo 141 (JP)**
- **Igarashi, Shuichi,
c/o Sony Magnetic Products Inc.
Tokyo 141 (JP)**

(74) Representative: **Thomas, Christopher Hugo et al
London EC4A 1DA (GB)**

(56) References cited:
**GB-A- 448 238         GB-A- 448 238
GB-A- 2 207 576     US-A- 2 163 548
US-A- 4 145 712**

## Description

This invention relates to a laser beam deflection apparatus.

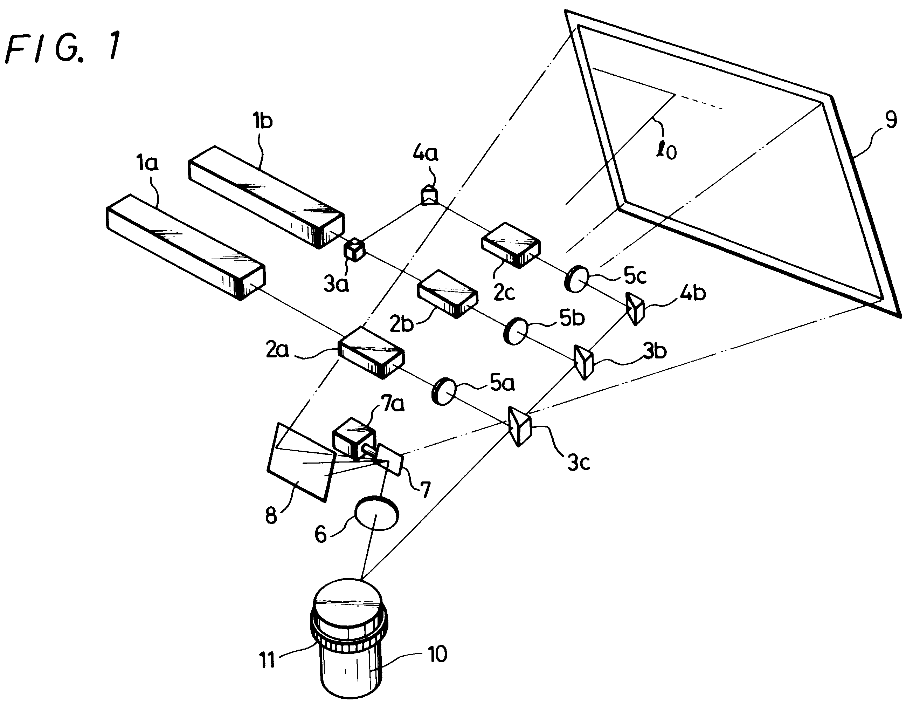

Figure 1 shows the overall arrangement of a video display apparatus of the projection type, disclosed in Japanese Laid-Open Utility Model Gazette No. JP-Y-56-152456 and The Journal of the Institute of Television Engineers of Japan, Vol. 29, No. 2, 1975.

Referring to Figure 1, there are provided laser light sources 1a and 1b which might be semiconductor lasers or gas lasers. A red laser beam from the laser light source 1a enters an optical modulator 2a. A green laser beam and a blue laser beam from the laser light source 1b fall on a dichroic mirror 3a, where they are separated to provide a green laser beam and a blue laser beam. The green laser beam enters an optical modulator 2b, whereas the blue laser beam passes through a reflection prism 4a to an optical modulator 2c. Modulation signals corresponding to three primary colour signals, provided as a video signal of an image to be displayed, are supplied to the optical modulators 2a, 2b and 2c, respectively. The optical modulators 2a, 2b and 2c modulate the luminous intensity or the red, green and blue laser beams on the basis of the modulation signals. The laser beams from the optical modulators 2a, 2b and 3c are supplied to lenses 5a, 5b and 5c for adjusting the diameters of the respective laser beams. The blue laser beam from the lens 5c passes to a dichroic mirror 3b through a reflection prism 4b, and the green laser beam from the lens 5b falls on the other mirror face of the dichroic mirror 3b, whereby the blue and green laser beams are mixed. The mixed laser beam falls on a dichroic mirror 3c, and the red laser beam from the lens 5a falls on the other mirror face of the dichroic mirror 3c, whereby a mixed laser beam of three primary colours is obtained. The modulated, mixed laser beam is supplied to a reflection portion 11 of a rotating polygonal mirror 10.

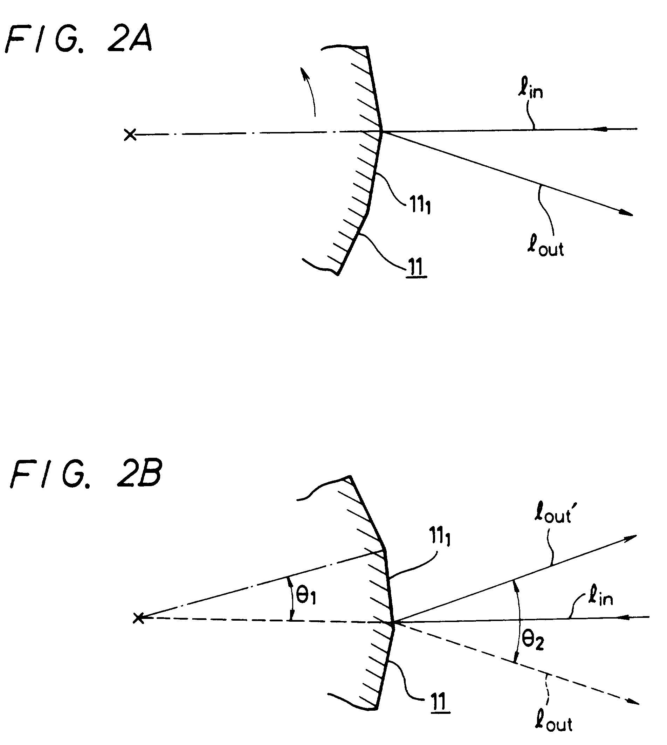

In the polygonal mirror 10, a reflecting portion 11 is formed by arranging a plurality of flat mirrors with an equal spacing in an annular fashion. This annular-shaped reflecting portion 11 is rotated at high speed by some suitable drive means such as a motor. The flat mirrors forming the reflecting portion 11 may be a regular icosipentahedron thereby to deflect a laser beam incident on each flat mirror. Figures 2A and 2B illustrate the deflected states of the laser beam.

As, for example, shown in Figure 2A, when a laser beam $I_{in}$ becomes incident on an end portion of a flat mirror $11_1$ of the reflecting portion 11 by the rotation of the reflecting portion 11, a laser beam $I_{out}$ is reflected towards the lower portion of Figure 2A. When the reflecting portion 11 is rotated, the angle at which the laser beam $I_{in}$ becomes incident on the flat mirror $11_1$ is gradually changed, thus changing the outgoing direction of the reflected laser beam $I_{out}$. As shown in Figure 2B, when the reflecting portion 11 is rotated by an angle $\theta_1$ to cause the laser beam $I_{in}$ to become incident on the other end portion of the flat mirror $11_1$, a reflected laser beam $I_{out}'$ is oriented towards the upper portion of Figure 2B. In that event, an angle $\theta_2$ formed by the laser beams $I_{out}$ and $I_{out}'$ becomes the deflection angle of the flat mirror $11_1$, that is the angle through which the laser beam is scanned as the reflecting portion 11 is rotated. This constitutes one "deflection cycle" of the rotating reflection portion 11. Other flat mirrors of the reflecting portion 11 deflect the laser beams by a similar deflection angle so that, when the reflecting portion 11 is composed of 25 flat mirrors, the laser beam is deflected through the angle $\theta_2$, 25 times per revolution of the reflecting portion 11.

Turning back to Figure 1, the laser beam reflected by the polygonal mirror 10 passes through a projection lens 6 to a galvano mirror 7 which is controlled in rotation by a drive source 7a. When the galvano mirror 7 is rotated during a predetermined interval by the drive source 7a, the laser beam from the polygonal mirror 10 is deflected through a predetermined deflection angle over a predetermined interval. In that case, the deflection direction of the polygonal mirror 10 and the deflection direction by the galvano mirror 7 are selected to be at right angles to each other. The deflection by the polygonal mirror 10 corresponds to the horizontal deflection in the television receiver, whereas the deflection by the galvano mirror 7 corresponds to the vertical deflection in the television receiver.

A laser beam reflected by the galvano mirror 7 is reflected by a reflection mirror 8 and is made incident on the rear surface of a flat screen 9. In use, the viewer can see an image, formed by the scanning laser beams, from the front surface side of the screen 9.

Horizontal and vertical scanning cycles of the video signal for forming the modulation signals supplied to the optical modulators 2a, 2b and 2c are synchronised with the deflection cycle of the polygonal mirror 10 and the deflection cycle of the galvano mirror 7, whereby an image based on the video signal is displayed on the screen 9 by the raster-scanning of the laser beams. Therefore, an image of one field-time is displayed on the screen 9 during one field period of the video signal. Hence, the display apparatus of Figure 1 is operated as a projection-type video display apparatus.

The operation of the thus arranged video display apparatus will be described next.

When a video signal, for example, of 1125 horizontal scanning lines is displayed, the polygonal mirror 10 having 25 flat mirrors must be rotated at 81000 rpm, which needs a special drive motor and a special bearing for effecting such high speed rotation. If the polygonal mirror 10 is rotated at such high speed, then the flat mirrors of the polygonal mirror will be moving faster than the velocity of sound, which is not desirable from a safety standpoint.

In order to solve the above-described problems, it is proposed to decrease the rotational speed of the polygonal mirror by increasing the number of flat mirrors formed on the reflecting portion of the polygonal mirror.

This proposal is not advantageous in practice for the following reasons.

If the rotating portion of the polygonal mirror is increased in diameter, then a greater centrifugal force is applied to the reflecting portion of the polygonal mirror, thereby producing an elastic strain on the mirror surface. As a result, the raster-scanning of the laser beam is disturbed and also a large torque motor is necessarily required, which is not practical. Moreover, if the number of flat mirrors is increased without increasing the diameter of the rotating portion of the polygonal mirror, then the area of each flat mirror will be decreased, so that the deflection angle becomes very small from a laser beam and beam spot relationship standpoint, which is also not advantageous in practice.

A specific example of this defect will now be described.

If a flat mirror is formed on each plane of a polygonal mirror having pentacontane reflection faces and a diameter of 40 cm, the width of each flat mirror becomes 2.5 cm. When a laser beam having a spot diameter of 1 mm becomes incident on the polygonal mirror, if the laser beam becomes incident on both planes at the boundary portion of the two flat mirrors, then a so-called eclipse will occur. This eclipse makes respective end portions of each plane become invalid by 1 cm each, making 40% of each plane invalid. Therefore, only 60% of the plane can be effectively utilised, and hence the deflection angle becomes very small, which is not advantageous in practice.

Furthermore, if the beam diameter of the laser beam is reduced, then the resolution of the image to be displayed will be degraded. Accordingly, it is not possible to reduce the invalid period by reducing the beam diameter of the laser beam. GB-A-448 238 discloses a deflection apparatus comprising a rotating polygonal mirror and a plurality of reflection means positioned in facing relation to the polygonal mirror. In this prior art apparatus the reflection means are arranged in an arc concentric with the drum.

According to the present invention there is provided a laser beam deflection apparatus including:

a rotatable polygonal mirror having a plurality of reflection surfaces; and
means for directing a laser beam to be incident on each of said reflection surfaces in turn as the polygonal mirror rotates, so that the laser beam is deflected through a predetermined angle during a predetermined increment of rotation (deflection cycle) of the polygonal mirror;
wherein:
n reflection means are positioned in facing relation to the polygonal mirror, where n is an integer, and are aligned in the rotational direction of the polygonal mirror for reflecting the laser beam reflected from one of said reflection surfaces back towards said reflection surfaces, whereby the laser beam is twice reflected by said reflection surfaces and is deflected through the predetermined angle n times for each said deflection cycle of the polygonal mirror; wherein the reflection means includes flat mirrors which are aligned with respect to the polygonal mirror such that hypothetical normal lines passing through the centres of each of the flat mirrors converge at the same point on one of said reflection surfaces; and
wherein the polygonal mirror is rotatable about a centre of rotation and a hypothetical inscribed circle of the polygonal mirror has a radius r and the maximum length L from the centre of rotation of the polygonal mirror to the flat mirrors is determined by:

$$L = (n + 5)\, r/4.$$

The invention will now be described by way of example with reference to the accompanying drawings, throughout which like parts are referred to by like references, and in which:

Figure 1 is a perspective view of a previously proposed video display apparatus of projection type;
Figures 2A and 2B are schematic diagrams of a reflecting portion and laser beams of the apparatus of Figure 1;
Figure 3 is a front view illustrating a first embodiment of a laser beam deflection apparatus according to the present invention;
Figure 4 is a diagrammatic section on the line IV-IV of Figure 3;
Figures 5A to 5H are schematic diagrams for explaining the operation of the first embodiment;
Figures 6A and 6B are schematic diagrams of incident points of a laser beam, for explaining the operation of the first embodiment;
Figure 7 is a diagrammatic view of a section of a second embodiment of a laser beam deflection apparatus according to the present invention;
Figures 8A to 8H are schematic diagrams for explaining the operation of the second embodiment;
Figures 9A and 9B are schematic diagrams of incident points of a laser beam, for explaining the operation of the second embodiment; and
Figures 10A to 10H are schematic diagrams for explaining a modified example of the present invention.

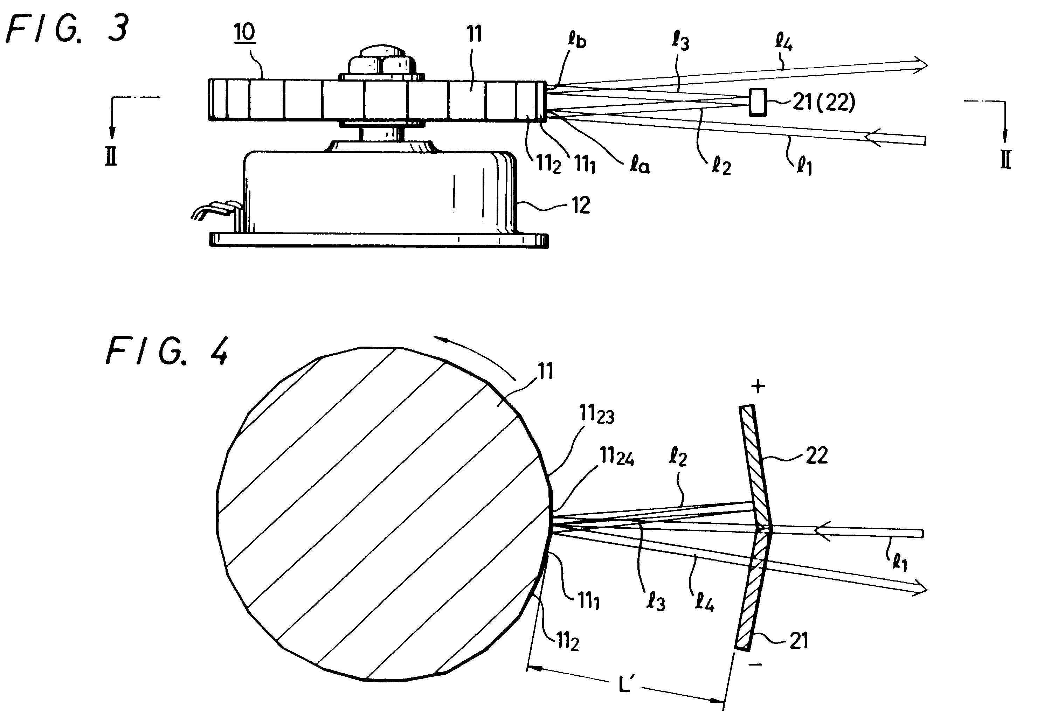

The first embodiment of laser beam deflection apparatus according to the present invention will be described with reference to Figures 3 to 6, in which Figures 3 and 4 illustrate mainly a polygonal mirror 10. The video display apparatus of this embodiment draws a visual image by raster-scanning of the laser beam similarly to the apparatus of Figure 1. Figure 3 shows the main components of the laser beam deflection apparatus, and the other portions are constructed similarly to those of Figure 1.

The rotating polygonal mirror 10 comprises a reflecting portion 11 and a driving motor 12. The reflecting portion 11 is formed by arranging a regular tetracosane or 24 flat mirrors $11_1$, $11_2$, .... $11_{24}$ with an equal spacing in an annular fashion. The reflecting portion 11 is rotated in the direction indicated by the arrow in Figure 4 by the driving motor 12.

In this embodiment, a laser beam $I_1$, modulated in intensity, is made incident on each of the respective flat mirrors $11_1$ to $11_{24}$, in turn, from a direction slightly lower than the reflecting portion 11, and in a direction towards the rotational centre of the polygonal mirror 10. A reflected laser beam $I_2$ which is the incident laser beam $I_1$ reflected on the reflecting portion 11, is deflected through a deflection angle by each one of the flat mirrors $11_1$, $11_1$, $11_2$, ..., $11_{24}$ in accordance with the rotation of the reflecting portion 11. The point at which the laser beam becomes incident on the reflecting portion 11 assumes a primary incident point $I_a$. Two flat mirrors 21 and 22 are located at the position to which the reflected laser beam $I_2$ reaches. The respective flat mirrors 21 and 22 are located such that, as the reflecting portion 11 rotates in the direction indicated, if the deflected range of the reflected laser beam $I_2$ is divided by one-half then the reflected laser beam $I_2$ within one deflected range (one horizontal scan line) becomes incident on the flat mirror 21, whereas the reflected laser beam $I_1$ within the other deflected range (the next horizontal scan line) becomes incident on the other flat mirror 22.

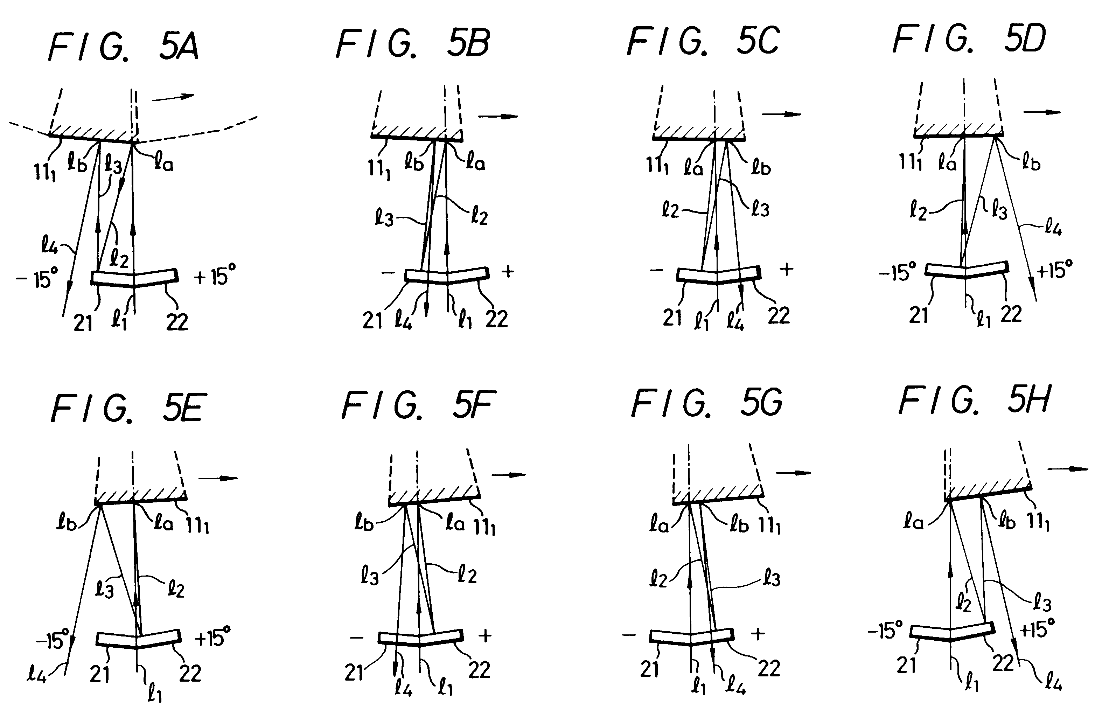

In other words, the reflecting portion 11 of the polygonal mirror 10 is formed of the 24 flat mirrors $11_1$ to $11_{24}$ as described above, so that the angle through which the reflected laser beam $I_2$ is deflected at each of the flat mirrors $11_1$, $11_2$, ..., $11_{24}$ becomes 30°. For a deflection angle of 30°, the reflected laser beam $I_2$ in the first deflection range of 15° is incident on the flat mirror 21, and the reflected laser beam $I_2$ in the remaining range of 15° is incident on the other flat mirror 22. In that case, the direction in which the reflected laser beam $I_2$ is deflected towards the flat mirror 21 side assumes a minus (-) direction, whereas the direction in which the reflected laser beam $I_2$ is deflected towards the flat mirror 22 side assumes a plus (+) direction, taken with respect to the incident laser beam $I_1$. (See Figures 5A to 5H.)

A reflected laser beam $I_3$ of the laser beam $I_2$ incident on the flat mirrors 21 and 22 again passes to the reflecting portion 11 of the polygonal mirror 10. The point at which the laser beam $I_3$ is incident on the reflecting portion 11 of the polygonal mirror 10 is a secondary incident point $I_b$. The mirrors are so arranged that normal lines extended perpendicularly from the centre (incident point provided when the deflection angle is 7.5°) of each of the reflecting surfaces of the flat mirrors 21 and 22 are convergent at the spot $I_b$ vertically aligned with the primary incident point $I_a$. More specifically, the respective flat mirrors 21 and 22 are located such that, when the incident laser beam $I_2$, which is deflected through the range of 15° at each of the flat mirrors 21 and 22 is deflected at the intermediate deflection angle of 7.5° from the start of incidence, the secondary incident point $I_b$ at which the reflected laser beam $I_3$ again falls on the reflecting portion 11 of the polygonal mirror 10 is vertically aligned with the primary incident point $I_a$ as seen from the top of the polygonal mirror 10 (state of Figure 4).

A reflected laser beam $I_4$ reflected at the secondary incident point $I_b$ of the reflecting portion 11 on the basis of the laser beam $I_3$ travels above the flat mirrors 21 and 22 and reaches the projection lens (see Figures 1 and 3).

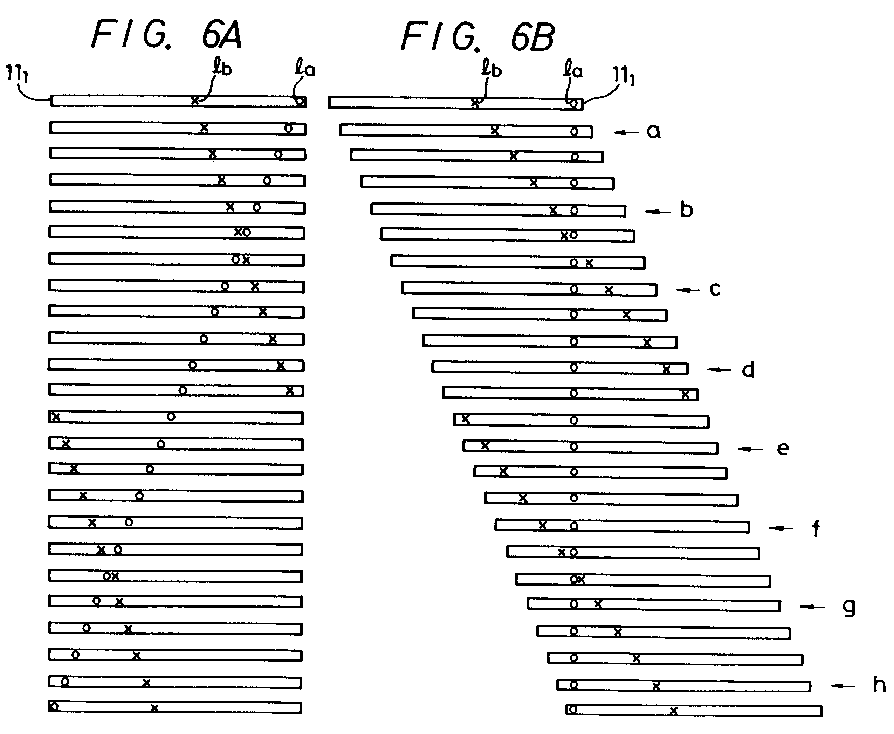

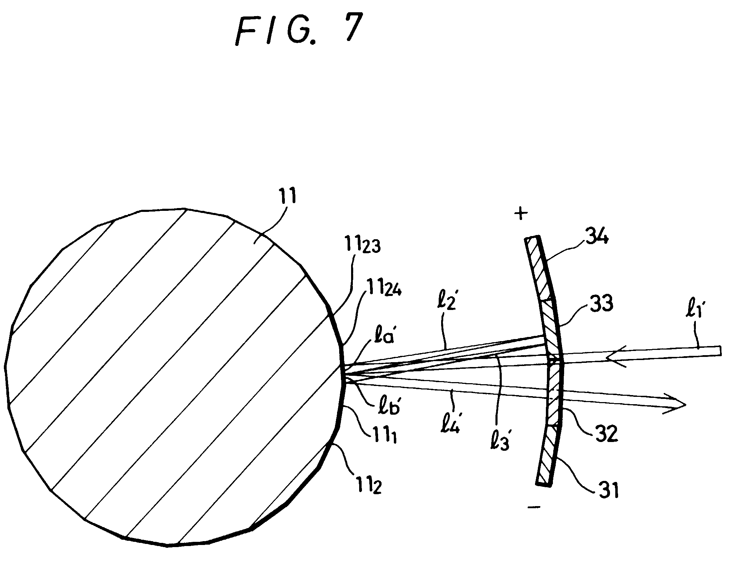

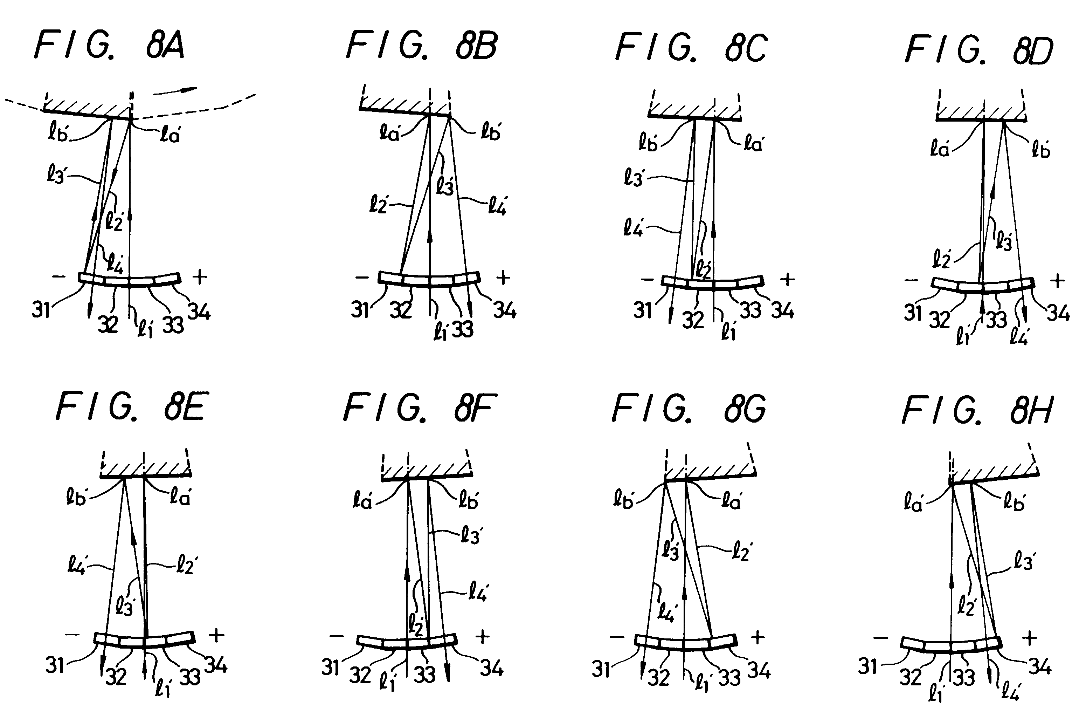

The deflected condition of the laser beam incident on the polygonal mirror 10 in this embodiment will be described with reference to Figures 5A to 5H and Figures 6A and 6B.

Initially, let us describe the deflected condition of the laser beam in which the flat mirrors 21 and 22 are not provided. In that case, the reflecting portion 11 of the polygonal mirror 10 is formed of the 24 flat mirrors $11_1$ to $11_{24}$ so that when the reflecting portion 11 is rotated by 15°, the reflecting portion 11 is moved by the width of one of the flat mirrors $11_1$ to $11_{24}$. Accordingly, the laser beam $I_2$ reflected during the rotation of 15° is deflected from the maximum minus direction of 15° towards the extreme plus direction of 15°. Therefore, the laser beam $I_2$ is deflected through a deflection angle of a total of 30° by one of the flat mirrors $11_1$ to $11_{24}$.

In the case of the embodiment of Figure 3, the flat mirrors 21 and 22 are provided, so that the laser beam falls on the polygonal mirror 10 one more time, with a different incident angle. Consequently, the laser beam $I_4$ finally reflected from the reflecting portion 11 is deflected towards the ± directions by 15° each, that is, for a total of 30° when the reflecting portion 11 is rotated by only 7.5°. Therefore, when the reflecting portion 11 is rotated by a full rotational angle of 15° corresponding to the width of one of the flat mirrors $11_1$ to $11_{24}$, the laser beam is deflected twice, through the deflection angle of 30°.

The condition of the laser beam during this time will now be described. Figures 5A to 5H illustrate the changes occurring when the laser beam $I_1$ is incident, for example, on the flat mirror $11_1$ of the reflecting portion 11 during one deflection cycle.

As shown in Figure 5A, when the primary incident point $I_a$ of the laser beam $I_1$ is located at one end portion of the flat mirror $11_1$, the reflected laser beam $I_2$ is deflected towards the minus direction, and the reflected laser beam $I_2$ is incident on the outer portion of the flat mirror 21. Moreover, the secondary incident point $I_b$ of the reflected laser beam $I_3$ from the flat mirror 21 is located at substantially the central portion of the flat mirror $11_1$. The reflected laser beam $I_4$ from the secondary incident point $I_b$ is deflected towards the minus direction substantially parallel to the light path of the laser beam $I_2$.

Under this condition, the reflected laser beam $I_4$ is sequentially deflected towards the plus direction in accordance with the movement of the flat mirror $11_1$ due to the rotation of the polygonal mirror 10 as shown in Figures 5B to 5D. In that case, as shown in Figure 5D, when the primary incident point $I_a$ on the flat mirror $11_1$ is lo-

cated at about the central portion of the flat mirror $11_1$ (that is, when the deflection angle of the laser beam $l_2$ becomes approximately 7.5°) the deflection angle of the reflected laser beam $l_4$ towards the plus direction is a maximum and the angle formed by the laser beam $l_2$ and the laser beam $l_4$ becomes about 15°.

As shown in Figure 5E, when the position of the primary incident point $l_a$ on the flat mirror $11_1$ has passed the central portion of the flat mirror $11_1$, so that the reflected laser beam $l_2$ is deflected towards the plus direction, the laser beam $l_2$ is incident on the other flat mirror 22. At that time, the secondary incident point $l_b$ is initially located at the other end portion of the flat mirror $11_1$, whereby the reflected beam $l_4$ from the secondary incident point $l_b$ is abruptly deflected towards the minus direction. The reflected laser beam $l_4$ is thereafter again sequentially deflected towards the plus direction in accordance with the movement of the flat mirror $11_1$ due to the rotation of the polygonal mirror 10 as shown in Figures 5F to 5H. In that case, as shown in Figure 5H, when the primary incident point $l_a$ on the flat mirror $11_1$ is located at the other end portion thereof, the deflection angle of the reflected laser beam $l_4$ towards the plus direction is a maximum, and the laser beams $l_2$ and $l_4$ become substantially parallel to each other. As the rotating reflection portion 11 continues to rotate the laser beam $l_1$ becomes incident on the flat mirror $11_1$, and the cycle is repeated.

Figures 6A and 6B illustrate the conditions that the primary incident point $l_a$ and the secondary incident point $l_b$ on the flat mirror $11_1$ of the polygonal mirror 10 are constantly changed. Figure 6A shows the incident points where the flat mirror $11_1$ is fixed at a constant position, whereas Figure 6B shows incident points where the primary incident point $l_a$ fixed at a constant position. In Figures 6A and 6B, an open circle represents the primary incident point $l_a$, and a cross mark represents the secondary incident point $l_b$. Moreover, in Figures 6A and 6B, the states of the flat mirror $11_1$ as shown by reference letters a to h indicate incident points corresponding to the incident states of Figures 5A to 5H, respectively. As shown in Figures 6A and 6B, the secondary incident point $l_b$ is changed under the condition that it is divided by one-half. It is thus to be understood that the deflection at the same deflection angle and in the same deflection range is performed twice by the single flat mirror $11_1$.

The conditions in which the deflection at the same deflection angle and in the same deflection range is performed at each flat mirror of the polygonal mirror 10 will now be described.

Assuming that n is the number of flat mirrors 21 and 22 provided in facing relation to the polygonal mirror 10, and also assuming that r is the radius of an inscribed circle of the polygonal mirror 10, then the maximum length L from the rotational centre of the polygonal mirror 10 to the flat mirrors 21 and 22 is expressed by the following equation:

$$L = (n + 5) \, r/4 \qquad (1)$$

In this embodiment, two flat mirrors 21 and 22 are provided and this yields n = 2. Therefore, L = 7r/4 is satisfied. Further, assuming that L' is the maximum distance from the surface of the reflecting portion 11 of the polygonal mirror 10 to the flat mirrors 21 and 22, then the maximum length L' is expressed by the following equation:

$$L' = (n + 1) \, r/4 \qquad (2)$$

If the flat mirrors 21 and 22 are located at the positions in which equation (1) or (2) is satisfied, then the laser beam is deflected twice.

With a display apparatus using the laser beam deflection apparatus of this embodiment, when the rotational speed of the polygonal mirror 10 is the same as that of the previously proposed apparatus, the laser beam is deflected twice at the same deflection angle. Accordingly, if the number of deflections is to be the same, then the rotational speed of the polygonal mirror 10 can be decreased. Therefore, a special motor, bearing and the like for rotating the polygonal mirror 10 at a very high speed are not needed. In this embodiment, only two flat mirrors 21 and 22 are provided, so that the laser beam deflection apparatus can be simplified in arrangement. Furthermore, if the rotational speed of the polygonal mirror 10 is selected to be the same as that of the previous proposed apparatus, the number of flat mirrors can be reduced, whereby the diameter of the reflecting portion 11 of the polygonal mirror 10 can be reduced or the width of each of the flat mirrors $11_1$ to $11_{24}$ can be increased.

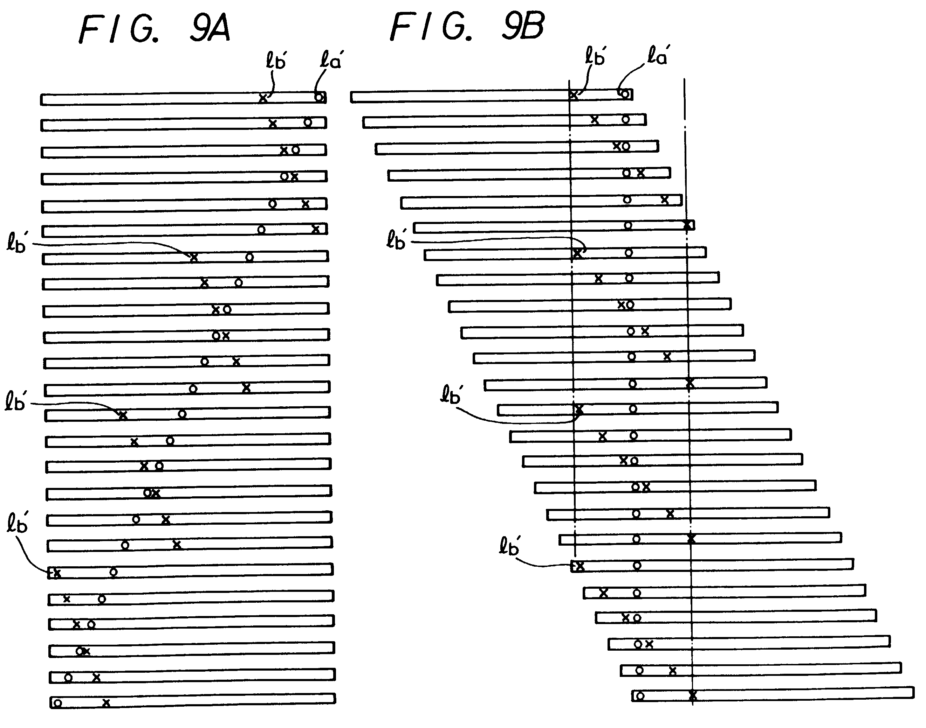

A second embodiment of laser beam deflection apparatus according to the present invention will be described with reference to Figures 7 to 10. In this embodiment, similarly to the first embodiment of Figure 3, the laser beam deflection apparatus is applied to a video laser display apparatus.

In this embodiment, a laser beam is deflected four times, each time the flat mirrors $11_1$ to $11_{24}$ of the polygonal mirror 10 are rotated by the same amount. Similarly to the first embodiment of Figure 3, a laser beam $l_1'$, modulated in intensity, falls on an incident point $l_a'$ of each of the flat mirrors $11_1$ to $11_{24}$ of the reflecting portion 11 with a very small upward inclination angle. As shown in Figure 7, four flat mirrors 31, 32, 33 and 34 are located at the positions to which the reflected laser beam $l_2'$, which is the incident laser beam $l_1'$ reflected by the reflecting portion 11, reaches. The flat mirrors 31, 32, 33 and 34 are located such that, when the deflection range of the reflected laser beam $l_2'$ is divided equally by four, the reflected laser beam $l_2'$ within the deflection range nearest to the minus direction is incident on the first flat mirror 31, the reflected laser beam $l_2'$ within the adjacent deflection range is incident on the second flat mirror 32, the reflected laser beam $l_2'$ within the adjacent deflection range is incident on the third flat mirror 33, and the reflected laser beam $l_2'$ within the deflection range nearest to the plus direction is incident on the fourth flat mirror 34.

More specifically, the reflecting portion 11 of the polygonal mirror 10 is formed of the 24 flat mirrors $11_1$ to $11_{24}$, so that the angle through which the reflected laser

beam $I_2'$ is deflected at each of the flat mirrors $11_1$ to $11_{24}$ becomes 30°. For an overall deflection angle of 30°, the reflected laser beam $I_2'$ falls on a different flat mirror 31 to 34 at every 7.5° of rotation.

A reflected laser beam $I_3'$ of the laser beam $I_2'$ incident on each of the flat mirrors 31 to 34 is made incident on the reflecting portion 11 of the polygonal mirror 10 one more time. The point at which the laser beam $I_3'$ is incident on the reflecting portion 11 is assumed to be a secondary incident point $I_b$. In that case, the flat mirrors 31 to 34 are located such that, when the incident laser beam $I_2'$ is deflected in the deflection range of 7.5°, and each of the flat mirrors 31 to 34 is given an intermediate deflection angle of 3.75° from the start of incidence, the secondary incident point $I_b'$ at which the reflected laser beam $I_3'$ is again incident on the reflecting portion 11 of the polygonal mirror 10 is vertically aligned with the primary incident point $I_a'$, that is when the polygonal mirror 10 is viewed from above.

A laser beam $I_4'$ reflected from the secondary incident point $I_b'$ of the reflecting portion 11 of the polygonal mirror 10 on the basis of the laser beam $I_2'$ travels above the flat mirrors 31 to 34, and is supplied to the projection lens (see Figure 1).

The deflected conditions of the laser beams incident on the polygonal mirror 10 of the second embodiment will now be described with reference to Figures 8A to 8H and Figures 9A and 9B.

In this embodiment, there are provided four flat mirrors 31 to 34, so that the deflection is performed four times when the reflecting portion 11 is rotated by a rotational angle of 15° corresponding to the width of one of the flat mirrors $11_1$ to $11_{24}$ of the polygonal mirror 10. In this embodiment, however, each deflection angle is reduced to one-half of that of the first embodiment, that is, 15°. Figures 8A to 8H show the deflected conditions of the laser beams.

As shown in Figure 8A, when the primary incident point $I_a'$ of the laser beam $I_1'$ is located at one end portion of the flat mirror $11_1$, the reflected laser beam $I_2'$ is deflected towards the minus direction so that the reflected laser beam $I_2'$ is incident on the outer end portion of the first flat mirror 31. Moreover, the secondary incident point $I_b'$ of the reflected laser beam $I_3$ from the flat mirror 31 is located at an intermediate portion between one end portion and the centre of the flat mirror $11_1$. Then, the reflected laser beam $I_4'$ at the secondary incident point $I_b'$ is deflected towards the minus direction and is emitted therefrom. Under this condition, in accordance with the movement of the flat mirror $11_1$ due to the rotation of the polygonal mirror 10, the reflected laser beam $I_4'$ is sequentially deflected towards the plus direction as shown in Figure 8B. This completes one sweep of the laser beam $I_4'$.

When the reflected laser beam $I_2'$ is incident on the second flat mirror 32 as shown in Figure 8C, the reflected laser beam $I_4'$ from the secondary incident point $I_b'$ is again deflected towards the minus direction, whereby the reflected laser beam 24 is sequentially deflected towards the plus direction in accordance with the rotation of the polygonal mirror 10 as shown in Figure 8D to complete another sweep of the laser beam $I_4'$.

In the same fashion, as shown in Figures 8E to 8H, each time the polygonal mirror 10 is rotated by a rotational angle of 7.5°, the reflected laser beam $I_2$, is incident on the other flat mirrors 33 and 34, whereby the reflected laser beam $I_4'$ is deflected through 15° by each mirror.

Figures 9A and 9B illustrate the conditions that the primary incident point $I_a'$ and the secondary incident point $I_b'$ on the flat mirror $11_1$ of the polygonal mirror 10 are changed at constant times. Figure 9A shows incident points where the flat mirror $11_1$ is fixed at a constant position, whereas Figure 9B shows incident points where the primary incident point $I_a'$ is fixed at a constant position. In Figures 9A and 9B, an open circle represents the primary incident point $I_a'$, and a cross mark represents the secondary incident point $I_b'$. As shown in Figures 9A and 9B, the secondary incident point $I_b'$ is changed under the condition that it is divided equally by four. Therefore, the laser beam is deflected four times through the same deflection angle and in the same deflection range by one flat mirror $11_1$. In that case, as shown in Figure 9B, when the primary incident point $I_a'$ is located at a constant position, the secondary incident point $I_b'$ falls within the same range shown by a one-dot chain line.

In the case of the second embodiment shown in Figure 7, in order that the laser beam is deflected on each mirror surface of the polygonal mirror 10 at the same deflection angle and in the same deflection range, equations (1) and (2) must be satisfied. In other words, in the second embodiment, since there are provided four flat mirrors 31 to 34, a maximum length L from the rotational centre of the polygonal mirror 10 to the flat mirrors 31 to 34 is represented as L = (9/4)r.

As set out above, with the second embodiment, the number of deflections is increased by four times, so that the rotational speed of the polygonal mirror 10 can be decreased and that the number of mirror surfaces of the polygonal mirror 10 can be decreased. The total of four deflection angles at which the laser beams are deflected in the flat mirrors $11_1$ to $11_{24}$ of the polygonal mirror 10 is 60° similarly to the embodiment of Figure 3. Accordingly, one deflection angle becomes 15°, which is one-half of that of the embodiment of Figure 3.

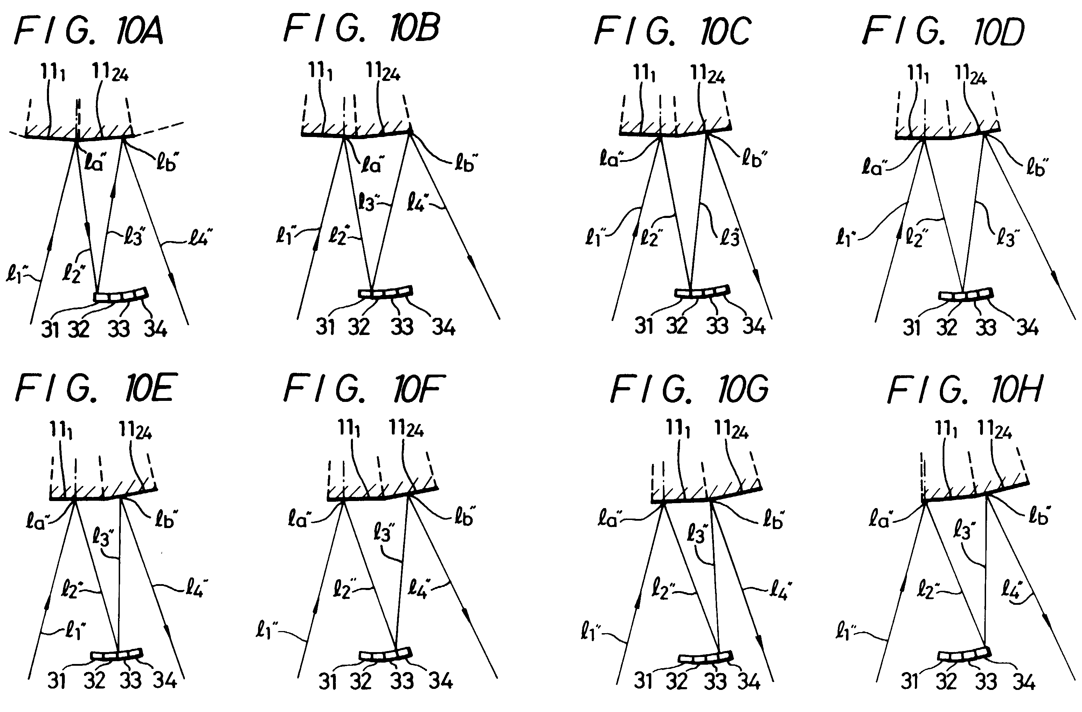

While the laser beams $I_1$ and $I_1'$ incident on the polygonal mirror 10 are made incident in the rotation centre direction of the polygonal mirror 10 in the above-described embodiment, the laser beam $I_1''$ may become incident on the polygonal mirror 10 with a small inclination angle in the lateral direction as shown in Figures 10A to 10H. In that case, normal lines extended from the centres (that is, incident points of the laser beam $I_2''$ when the deflection angle is 3.75°) of the flat mirrors 31 to 34 are converged at a predetermined point which is slightly distant from the primary incident point $I_a'''$, whereby a laser

beam $l_2$" reflected on each of the flat mirrors 31 to 34 is incident on an adjacent mirror surface (if the primary incident point $l_a$" is located on the flat mirror $11_1$, then the secondary incident point $l_b$" is located on the flat mirror $11_{24}$). With this arrangement, as shown in Figures 10A to 10H, the reflected laser beam $l_4$" from the secondary incident point $l_b$" is deflected in accordance with the rotation of the polygonal mirror 10 similarly to the second embodiment of Figure 7. Moreover, the deflection direction of the reflected laser beam $l_4$" can be changed from that of the second embodiment of Figure 7.

While the above-described embodiments of laser beam deflection apparatus are applied to a laser display apparatus in which the modulated laser beam is displayed on the screen, the laser beam deflection apparatus can be applied to various apparatuses in which a laser beam is deflected by a polygonal mirror. For example, the invention can be applied to a so-called laser printer in which a laser beam, modulated in intensity on the basis of a visual image to be displayed, is deflected by a polygonal mirror and is irradiated on a developing drum.

## Claims

1. A laser beam deflection apparatus including:

   a rotatable polygonal mirror (10) having a plurality of reflection surfaces (11); and
   means (3, 4) for directing a laser beam to be incident on each of said reflection surfaces (11) in turn as the polygonal mirror (10) rotates, so that the laser beam is deflected through a predetermined angle during a predetermined increment of rotation (deflection cycle) of the polygonal mirror (10);
   wherein:
   n reflection means (21, 22; 31 to 34) are positioned in facing relation to the polygonal mirror (10), where n is an integer, and are aligned in the rotational direction of the polygonal mirror (10) for reflecting the laser beam reflected from one of said reflection surfaces (11) back towards said reflection surfaces (11), whereby the laser beam is twice reflected by said reflection surfaces (11) and is deflected through the predetermined angle n times for each said deflection cycle of the polygonal mirror (10);
   wherein the reflection means (21, 22; 31 to 34) includes flat mirrors (21, 22; 31 to 34) which are aligned with respect to the polygonal mirror (10) such that hypothetical normal lines passing through the centres of each of the flat mirrors (21, 22; 31 to 34) converge at the same point on one of said reflection surfaces (11); and
   wherein the polygonal mirror (10) is rotatable about a centre of rotation and a hypothetical inscribed circle of the polygonal mirror (10) has a radius r and the maximum length L from the centre of rotation of the polygonal mirror (10) to the flat mirrors (21, 22; 31 to 34) is determined by:

$$L = (n + 5) \, r/4.$$

2. Apparatus according to claim 1 wherein the deflection path of the reflected incident laser beam from one of said reflection surfaces (11) is divided by n during each deflection cycle of the polygonal mirror (10).

3. Apparatus according to claim 2 wherein n equals 2, and the incident laser beam is deflected twice during each deflection cycle of the polygonal mirror (10).

4. Apparatus according to claim 2 wherein n equals 4, and the incident laser beam is deflected four times during each deflection cycle of the polygonal mirror (10).

5. Apparatus according to claim 3 wherein the reflection means (21, 22; 31 to 34) is a pair of flat mirrors (21, 22) which are aligned with respect to the polygonal mirror (10) such that hypothetical normal lines passing through the centres of each of the flat mirrors (21, 22) converge at the same point on one of said reflection surfaces (11).

6. Video display apparatus comprising:

   a laser beam source (1a, 1b);
   and laser beam deflection apparatus according to any one of the preceding claims.

## Patentansprüche

1. Laserstrahlablenkgerät mit:

   einem drehbaren Polygonspiegel (10), der mehrere Reflektionsflächen (11) aufweist, und einer Vorrichtung (3, 4), um einen Laserstrahl auszurichten, so daß er nacheinander auf jede der Reflektionsflächen (11) einfällt, wenn sich der Polygonspiegel (10) dreht, so daß der Laserstrahl über einen vorbestimmten Winkel während eines vorbestimmten Drehabschnittes (Ablenkzyklus) des Polygonspiegels (10) abgelenkt wird,
   wobei:
   n Reflektionsvorrichtungen (21, 22; 31 bis 34), wobei n eine ganze Zahl ist, dem Polygonspiegel (10) gegenüberliegend angeordnet sind und in Drehrichtung des Polygonspiegels (10) ausgerichtet sind, um den Laserstrahl, der von einer der Reflektionsflächen (11) reflektiert ist, in Richtung der Reflektionsflächen (11) zurückzureflektieren, wodurch der Laserstrahl von den Reflektionsflächen (11) zweimal reflektiert wird und für jeden Ablenkzyklus des Polygonspiegels (10) n-fach über den vorbestimmten Winkel abgelenkt wird,

wobei die Reflektionsvorrichtungen (21, 22; 31 bis 34) flache Spiegel (21, 22; 31 bis 34) aufweisen, die zum Polygonspiegel (10) so ausgerichtet sind, daß die hypothetischen Normalen, die durch die Durchgangszentren eines jeden flachen Spiegels (21, 22, 31 bis 34) gehen, auf einer der Reflektionsflächen (11) im selben Punkt konvergieren, und

wobei der Polygonspiegel (10) um ein Rotationszentrum drehbar ist, und ein hypothetischer Innenkreis des Polygonspiegel (10) weist einen Radius r auf und eine Maximallänge L vom Rotationszentrum zum des Polygonspiegels (10) zu den flachen Spiegeln (21 22; 31 bis 34) ist bestimmt durch:

$$L = (n + 5)\ r/4.$$

**2.** Gerät nach Anspruch 1, bei dem der Ablenkpfad des von einer der Reflektionsflächen (11) einfallenden reflektierten Laserstrahles während jedes Ablenkzyklus des Polygonspiegels (10) durch n geteilt wird.

**3.** Gerät nach Anspruch 2, bei dem n gleich 2 ist, und der einfallende Laserstrahl während eines jeden Ablenkzyklus des Polygonspiegels (10) zweimal abgelenkt wird.

**4.** Gerät nach Anspruch 2, bei dem n gleich 4 ist, und der einfallende Laserstrahl während eines jeden Ablenkzyklus des Polygonspiegels (10) viermal abgelenkt wird.

**5.** Gerät nach Anspruch 3, bei dem die Reflektionsvorrichtung (21, 22; 31 bis 34) ein Flach-Spiegelpaar (21, 22) ist, das zum Polygonspiegel (10) so ausgerichtet ist, daß die hypothetischen Normalen, die das Zentrum eines jeden Flach-Spiegels (21, 22) passieren, auf einer der Reflektionsflächen (11) im selben Punkt konvergieren.

**6.** Videoanzeigegerät mit:

einer Laserstrahlquelle (1a, 1b), und einem Laserstrahlablenkgerät nach einem der vorhergehenden Ansprüche.

**Revendications**

**1.** Appareil de déviation de faisceau laser, comprenant :

un miroir polygonal rotatif (10) ayant plusieurs surfaces réfléchissantes (11), et

un dispositif (3, 4) destiné à diriger un faisceau laser afin qu'il tombe sur chacune des surfaces réfléchissantes (11) tour à tout lorsque le miroir polygonal (10) tourne, si bien que le faisceau laser est dévié d'un angle prédéterminé pour une amplitude élémentaire prédéterminée de rotation (cycle de déviation) du miroir polygonal (10),

dans lequel

n dispositifs réfléchissants (21, 22 ; 31 à 34) sont placés en face du miroir polygonal (10), n étant un nombre entier, et sont alignés dans la direction de rotation du miroir polygonal (10) afin qu'ils réfléchissent le faisceau laser réfléchi par l'une des surfaces réfléchissantes (11) vers ces surfaces réfléchissantes (11) à nouveau, si bien que le faisceau laser est réfléchi deux fois par les surfaces réfléchissantes (11) et est dévié n fois de l'angle prédéterminé pour chaque cycle de déviation du miroir polygonal (10),

dans lequel les dispositifs réfléchissants (21, 22 ; 31 à 34) sont des miroirs plans (21, 22 ; 31 à 34) alignés sur le miroir polygonal (10) de manière que des normales hypothétiques passant par le centre de chaque miroir plan (21, 22 ; 31 à 34) convergent en un même point sur l'une des surfaces réfléchissantes (11), et

dans lequel le miroir polygonal (10) est destiné à tourner autour d'un centre de rotation, un cercle inscrit hypothétique du miroir polygonal (10) a un rayon r, et la distance maximale L du centre de rotation du miroir polygonal (10) aux miroirs plans (21, 22 ; 31 à 34) est déterminée par la relation :

$$L = (n + 5)r/4$$

**2.** Appareil selon la revendication 1, dans lequel le trajet de déviation du faisceau laser incident réfléchi par l'une des surfaces réfléchissantes (11) est divisé par n à chaque cycle de déviation du miroir polygonal (10).

**3.** Appareil selon la revendication 2, dans lequel n est égal à 2 et le faisceau laser incident est dévié deux fois à chaque cycle de déviation du miroir polygonal (10).

**4.** Appareil selon la revendication 2, dans lequel n est égal à 4, et le faisceau laser incident est dévié quatre fois à chaque cycle de déviation du miroir polygonal (10).

**5.** Appareil selon la revendication 3, dans lequel les dispositifs réfléchissants (21, 22 31 à 34) sont formés par deux miroirs plans (21, 22) qui sont alignés sur le miroir polygonal (10) de manière que les normales hypothétiques passant par le centre de chacun des miroirs plans (21, 22) convergent en un même point sur l'une des surfaces réfléchissants (11).

6.  Appareil d'affichage vidéo, comprenant :

    une source (1a, 1b) d'un faisceau laser, et
    un appareil de déviation d'un faisceau laser selon l'une quelconque des revendications précédentes.

FIG. 1

*FIG. 2A*

*FIG. 2B*

FIG. 3

FIG. 4

EP 0 390 534 B1

FIG. 5D   FIG. 5C   FIG. 5B   FIG. 5A
FIG. 5H   FIG. 5G   FIG. 5F   FIG. 5E

# FIG. 6A    FIG. 6B

EP 0 390 534 B1

FIG. 7

FIG. 8A
FIG. 8B
FIG. 8C
FIG. 8D
FIG. 8E
FIG. 8F
FIG. 8G
FIG. 8H

FIG. 9A          FIG. 9B

FIG. 10A   FIG. 10B   FIG. 10C   FIG. 10D
FIG. 10E   FIG. 10F   FIG. 10G   FIG. 10H